Europäisches Patentamt

European Patent Office

Office européen des brevets

(11) Numéro de publication: **0 407 316 A1**

(12) **DEMANDE DE BREVET EUROPEEN**

(21) Numéro de dépôt: 90420318.9

(22) Date de dépôt: 05.07.90

(51) Int. Cl.⁵: **F04D 15/00,** F04D 29/04,
F04D 13/06, H02K 7/118,
H02K 7/12

(30) Priorité: 07.07.89 FR 8909903

(43) Date de publication de la demande:
09.01.91 Bulletin 91/02

(84) Etats contractants désignés:
AT BE CH DE DK ES GB GR IT LI LU NL SE

(71) Demandeur: **RENA S.A:**
**25 Avenue du Pont de Tasset**
**F-74000 Meythet(FR)**

(72) Inventeur: **Point, Jacques**
**19 Avenue des Romains**
**F-74000 Annecy(FR)**
Inventeur: **Joulia, Pierre**
**Route de Villard**
**F-74440 Saint Jorioz(FR)**

(74) Mandataire: **Bratel, Gérard et al**
**Cabinet GERMAIN & MAUREAU B.P. 3011011**
**F-69392 Lyon Cédex 03(FR)**

(54) **Pompe rotative à entraînement électrique.**

㉗ Cette pompe centrifuge, destinée au pompage
de liquides, comprend une turbine (1) liée en rotation à un rotor (7) avec aimant permanent appartenant a un moteur électrique de type synchrone. Le
rotor (7) qui possède un jeu axial (L) est reçu dans
un logement cylindrique (10) appartenant au corps
(9) du stator (8) du moteur. Pour orienter le sens
d'entraînement (F) du rotor (7) au démarrage de la
pompe, des configurations complémentaires sont
prévues d'une part sur la face frontale du rotor (7)
éloignée de la turbine (1), et d'autre part sur le fond
du logement (10). Ces configurations comprennent
des surfaces hélicoïdales (14,16) raccordées à leurs
extrémités par des crans (15,17).
Application particulière : pompe à eau pour
aquarium.

FIG.2

## POMPE ROTATIVE À ENTRAÎNEMENT ÉLECTRIQUE

La présente invention concerne une pompe rotative à entraînement électrique, destinée au pompage de liquides, par exemple au pompage d'eau.

Plus particulièrement, cette invention se rapporte à une pompe centrifuge qui comprend une turbine, liée en rotation à un rotor avec aimant permanent appartenant à un moteur électrique de type synchrone, dont le stator possède un corps pourvu d'un logement central de forme générale cylindrique recevant le rotor.

Dans une telle pompe rotative, la conception du moteur synchrone ne permet pas de définir un sens invariable de démarrage du rotor, donc un sens défini de rotation de la turbine liée au rotor. De ce fait, la forme donnée à la turbine doit permettre un rendement identique, quel que soit le sens de rotation de celle-ci qui correspond au sens de démarrage du rotor à la mise en marche de la pompe. En pratique, cette contrainte conduit à réaliser des turbines avec des ailettes radiales, dont la configuration ne permet pas d'optimiser le rendement des pompes rotatives à entraînement électrique du genre ici considéré.

La présente invention vise à supprimer cet inconvénient, en fournissant une telle pompe perfectionnée, pourvue d'un dispositif simple et peu coûteux qui oriente le sens d'entraînement du rotor au démarrage, et qui de ce fait permet d'optimiser les formes de la turbine, ainsi que de la sortie de liquide, afin d'améliorer le rendement de la pompe.

A cet effet, dans la pompe rotative à entraînement électrique objet de l'invention, il est prévu, d'une part sur la face du rotor éloignée de la turbine et tournée vers le fond du logement du corps du stator recevant ce rotor, et d'autre part sur le fond dudit logement lui-même, des configurations complémentaires comprenant au moins une surface hélicoïdale et au moins un cran raccordant des extrémités de surface hélicoïdale, le rotor possédant un jeu axial.

L'invention fournit ainsi un dispositif de démarrage unidirectionnel qui est particulièrement simple et économique, puisqu'il ne nécessite l'adjonction d'aucune pièce supplémentaire, et peut facilement résulter de formes obtenues directement par moulage ou par surmoulage de matière plastique. En particulier, dans le cas d'un rotor avec un aimant permanent surmoulé dans une matière plastique d'enrobage, il suffit de créer la ou les surfaces hélicoïdales, et le ou les crans, dans cette matière plastique à l'extrémité du rotor opposée à la turbine.

Le sens de rotation de la turbine étant parfaitement défini grâce aux dispositions prévues par l'invention, il devient possible de donner aux ailettes de cette turbine des formes profilées optimales dépendantes du sens de rotation, et d'optimiser aussi les formes de la sortie de liquide, en créant notamment une sortie tangentielle, ce qui procure un gain de puissance appréciable de la pompe, pour un moteur électrique de caractéristiques données.

De toute façon, l'invention sera mieux comprise à l'aide de la description qui suit, en référence au dessin schématique annexé représentant, à titre d'exemple non limitatif, une forme d'exécution de cette pompe rotative à entraînement électrique :

Figure 1 est une vue en coupe passant par l'axe d'une pompe à eau conforme à la présente invention, montrée en position de repos ;

Figure 2 est une vue en coupe similaire à figure 1, mais illustrant la position de fonctionnement de la pompe ;

Figure 3 est une vue partielle en perspective de cette pompe, montrant l'ensemble turbine-rotor et le fond du logement recevant le rotor.

La pompe à eau, montrée au dessin, comprend une turbine 1 montée tournante autour d'un axe 2 dans un carter 3 qui comporte une entrée d'eau axiale 4 et une sortie d'eau tangentielle 5. La turbine 1 est liée en rotation, par l'intermédiaire d'un arbre tubulaire 6 de faible longueur, à un rotor 7 avec aimant permanent qui appartient à un moteur électrique de type synchrone, dans le stator est indiqué en 8. Le stator 8 est entouré d'un corps 9 en matière moulée, pourvu d'un logement central 10 de forme générale cylindrique, ménagé suivant l'axe de la pompe et recevant le rotor 7. Le carter 3 de la turbine 1 est réuni à une extrémité du corps 9.

L'ensemble formé par la turbine 1, par l'arbre 6 et par le rotor 7 est monté non seulement tournant autour de l'axe 2, mais encore mobile suivant la direction longitudinale de l'axe 2, sur une faible course. L'axe 2 traverse de part en part l'ensemble turbine 1 - rotor 7 ; une extrémité de cet axe 2 est maintenue dans un palier 11 rendu solidaire du carter 3 par des bras radiaux 12, tandis que son extrémité opposée est maintenue dans un palier 13 prévu dans le fond du logement 10.

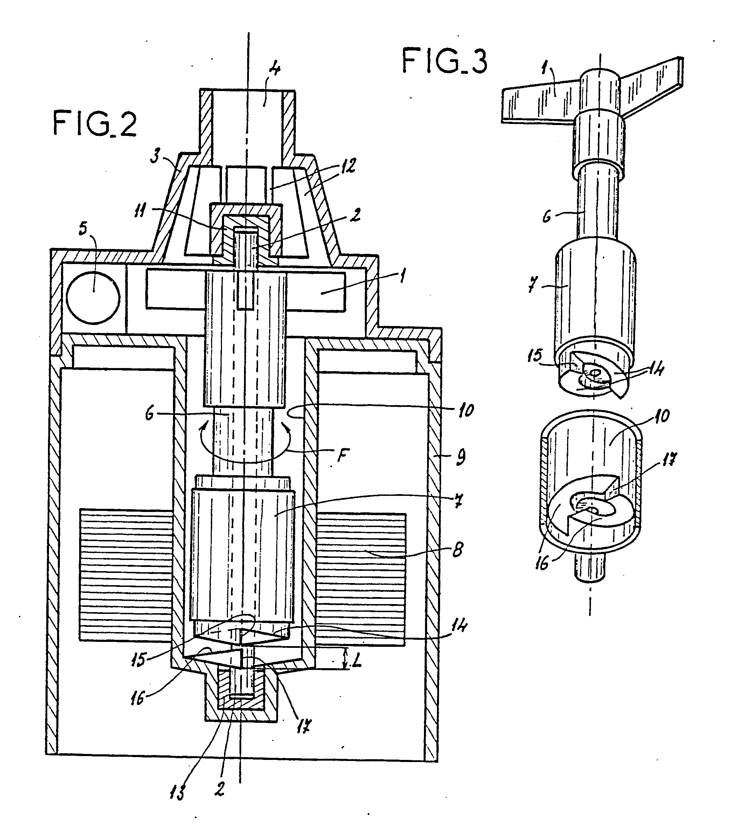

Selon l'invention, la face frontale du rotor 7 éloignée de la turbine 1, donc tournée vers le fond du logement 10, possède une configuration particulière comprenant au moins une surface hélicoïdale. Dans l'exemple illustré par le dessin, cette configuration comprend deux surfaces hélicoïdales 14, s'étendant chacune sur un demi-tour et raccordées entre elles, à leurs extrémités, par deux crans 15 diamétralement opposés - voir notamment la figure 3.

Le fond du logement 10 présente une configuration complémentaire, comprenant donc elle aussi deux surfaces hélicoïdales 16, s'étendant chacune sur un demi-tour et raccordées entre elles, à leurs extrémités, par deux crans 17 diamétralement opposés.

Les configurations précitées sont facilement obtenues par moulage : les surfaces hélicoïdales 14 et les crans 15 peuvent être formés dans la matière palstique d'enrobage surmoulant l'aimant permanent du rotor 7, tandis que les surfaces hélicoïdales 16 et les crans 17 sont créés dans la matière moulée du corps 9.

Le fonctionnement est le suivant :

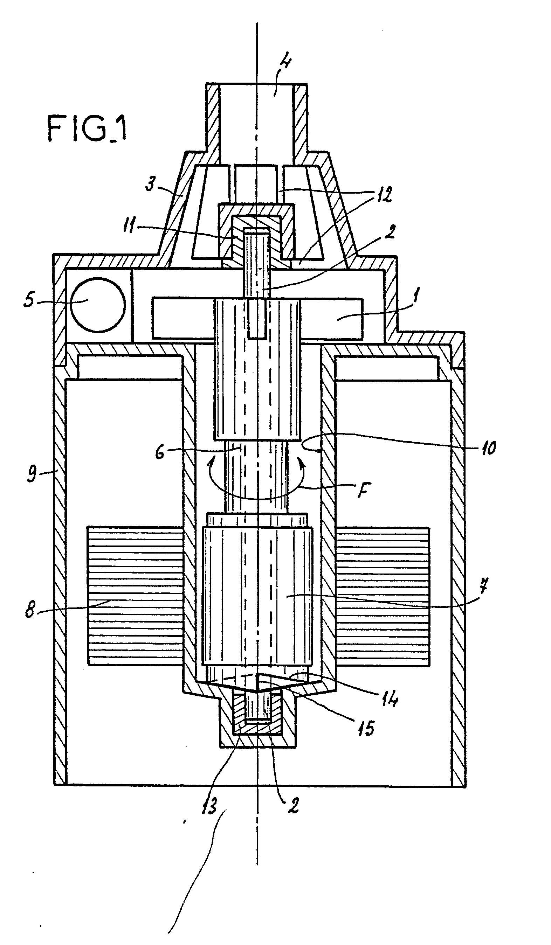

Au repos, comme le montre la figure 1, le rotor aimanté 7 occupe par rapport au stator 8, dans le sens axial, une position d'équilibre telle que la face frontale du rotor 7 soit en contact avec le fond du logement 10. Les surfaces hélicoïdales respectives 14 et 16 sont donc en contact les unes avec les autres, et les crans 15 se situent en regard des crans 17.

Au démarrage du moteur électrique, un seul sens de rotation, indiqué par une flèche F, est possible pour l'ensemble turbine 1 - rotor 7 en raison des configurations précitées et de la position axiale initiale du rotor 7. Après quelques tours du rotor 7 avec des montées sur les surfaces hélicoïdales formant des rampes, et des sauts sur les crans, la pompe crée son effet d'aspiration et la turbine 1 est déplacée axialement en se rapprochant de l'entrée d'eau 4. Comme le montre la figure 2, le rotor 7 est alors éloigné du fond du logement 10 en se dégageant d'une valeur L au moins égale à la hauteur des crans 15 et 17, L étant le jeu axial du rotor 7. L'ensemble turbine 1 - rotor 7 peut ainsi poursuivre librement sa rotation autour de l'axe 2, toujours dans le sens de la flèche F.

La pompe ici décrite est applicable, entre autres, comme pompe de circulation d'eau pour aquarium.

Comme il va de soi, l'invention ne se limite pas à la seule forme d'exécution de cette pompe rotative à entraînement électrique qui a été décrite ci-dessus, à titre d'exemple ; elle en embrasse, au contraire, toutes les variantes de réalisation et d'application respectant le même principe. En particulier, l'on ne s'éloignerait pas du cadre de l'invention :
- par des modifications de détail, concernant par exemple le nombre des surfaces hélicoïdales et des crans raccordant ces surfaces, le choix d'une seule surface hélicoïdale ou de plus de deux surfaces de ce genre ne modifiant pas le fonctionnement au démarrage ;

- par une fabrication différente, par exemple en formant les surfaces hélicoïdales et les crans sur une pièce spéciale rapportée sur le rotor ;
- par des modifications de formes des ailettes de la turbine, en fonction des caractéristiques de fonctionnement recherchées ;
- par des utilisations différentes de la pompe, autres que dans le domaine de l'aquariophilie, et pour des liquides pouvant être autres que de l'eau.

**Revendications**

1. Pompe rotative centrifuge à entraînement électrique, pour le pompage de liquides, comprenant une turbine (1) liée en rotation à un rotor (7) avec aimant permanent appartenant à un moteur électrique de type synchrone, dont le stator (8) possède un corps (9) pourvu d'un logement central (10) de forme générale cylindrique recevant le rotor (7), caractérisée en ce que pour orienter le sens d'entraînement (F) du rotor (7) au démarrage de la pompe, il est prévu, d'une part sur la face frontale du rotor (7) éloignée de la turbine (1) et tournée vers le fond du logement (10) recevant ce rotor (7), et d'autre part sur le fond dudit logement (10), des configurations complémentaires comprenant au moins une surface hélicoïdale (14,16) et au moins un cran (15,17) raccordant des extrémités de surface hélicoïdale, le rotor (7) possédant un jeu axial (L).

2. Pompe rotative à entraînement électrique selon la revendication 1, caractérisée en ce que les configurations précitées comprennent, sur la face frontale du rotor (7) et sur le fond du logement (10) recevant ce rotor, deux surfaces hélicoïdales (14,16) s'étendant chacune sur un demi-tour et raccordées entre elles, à leurs extrémités, par deux crans (15,17) diamétralement opposés.

3. Pompe rotative à entraînement électrique selon la revendication 1 ou 2, caractérisée en ce que, dans le cas d'un rotor (7) avec un aimant permanent surmoulé dans une matière plastique d'enrobage, la ou les surfaces hélicoïdales (14), et le ou les crans (15) de la face frontale sont créés dans cette matière plastique à l'extrémité du rotor (7) opposée à la turbine (1).

4. Pompe rotative à entraînement électriqueselon l'une quelconque des revendications 1 à 3, caractérisée en ce que l'ensemble turbine (1) -rotor (7) est monté non seulement tournant, mais aussi mobile en direction longitudinale, sur un axe (2) qui traverse de part en part cet ensemble et dont les extrémités sont maintenues dans des paliers (11,13).

FIG.1

FIG_2

FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 821 567 (DALE ERWIN) <br> * Abrégé; colonne 1, lignes 5-26,43-58; colonne 2, ligne 14 - colonne 3, ligne 54; figures * | 1 | F 04 D 15/00 <br> F 04 D 29/04 <br> F 04 D 13/06 <br> H 02 K 7/118 <br> H 02 K 7/12 |
| A | | 2 | |
| Y | EP-A-0 148 343 (EHEIM) <br> * Abrégé; page 2, lignes 19-28; page 5, lignes 9-18; page 8, ligne 21 - page 9, ligne 16; page 9, ligne 35 - page 10, ligne 12; page 11, ligne 1 - page 12, ligne 14; figures * | | |
| A | | 3,4 | |
| A | US-A-2 722 615 (MORGANSON) <br> * Colonne 1, lignes 15-18,51-72; colonne 2, lignes 46-56; colonne 3, ligne 25 - colonne 4, ligne 15; figures * | 1,2,4 | |

| | DOMAINES TECHNIQUES RECHERCHES (Int. Cl.5) |
|---|---|
| | F 04 D <br> H 02 K |

Le présent rapport a été établi pour toutes les revendications

| Lieu de la recherche | Date d'achèvement de la recherche | Examinateur |
|---|---|---|
| LA HAYE | 31-08-1990 | ZIDI K. |

EPO FORM 1503 03.82 (P0402)